(19) Europäisches Patentamt
European Patent Office
Office européen des brevets

(11) EP 1 527 139 B1

(12) EUROPEAN PATENT SPECIFICATION

(45) Date of publication and mention of the grant of the patent:
**21.09.2011 Bulletin 2011/38**

(21) Application number: **03792249.9**

(22) Date of filing: **04.08.2003**

(51) Int Cl.:
*C08L 83/04* (2006.01) *D06M 13/46* (2006.01)
*D06M 15/643* (2006.01) *D06M 15/647* (2006.01)

(86) International application number:
**PCT/EP2003/008609**

(87) International publication number:
**WO 2004/018562 (04.03.2004 Gazette 2004/10)**

(54) **COMPOSITIONS WHICH COMPRISE POLYORGANOSILOXANES WITH QUATERNARY AMMONIUM GROUPS**

ZUSAMMENSETZUNGEN, DIE POLYORGANOSILOXANE MIT QUATERNÄREN AMMONIUMGRUPPEN ENTHALTEN

COMPOSITIONS COMPRENANT DES POLYORGANOSILOXANES AVEC GROUPES D'AMMONIUM QUATERNAIRE

(84) Designated Contracting States:
**AT BE BG CH CY CZ DE DK EE ES FI FR GB GR HU IE IT LI LU MC NL PT RO SE SI SK TR**

(30) Priority: **08.08.2002 EP 02017823**

(43) Date of publication of application:
**04.05.2005 Bulletin 2005/18**

(73) Proprietor: **Huntsman Textile Effects (Germany) GmbH**
**86462 Langweid a. Lech (DE)**

(72) Inventors:
- **CHROBACZEK, Harald**
  **86153 Augsburg (DE)**
- **LINDMAIR, Gabriele**
  **86405 Meitingen (DE)**
- **TSCHIDA, Günther**
  **86830 Schwabmünchen (DE)**

(56) References cited:
**EP-A- 0 643 090**
**US-A- 4 062 999**
**US-A- 5 300 327**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 527 139 B1

## Description

The invention relates to compositions which comprise polyorganosiloxanes with at least one quaternary nitrogen atom. It further relates to aqueous dispersions which comprise such compositions and to the use of these aqueous dispersions.

It is known to treat fiber materials, in particular fabrics, with polyorganosiloxanes. The fiber materials are as a result given advantageous properties, such as, for example, a pleasantly soft hand. Polyorganosiloxanes which contain quaternary nitrogen atoms and their use for the treatment of fiber materials are likewise known, for example from DE-A 196 52 524 and WO 99/32539. In addition, DE-A 100 36 533, DE-A 100 36 677, DE-A 100 36 678, DE-A 100 36 693 and DE-A 100 36 694 likewise describe polysiloxanes which contain positively charged nitrogen atoms. US 4 833 225 and US 4 533 714 describe polysiloxanes which contain units with quaternary nitrogen atoms within the polysiloxane chain and the suitability of these polysiloxanes for cosmetic purposes. The use for the treatment of fiber materials, such as, for example, textiles, is not mentioned. The products according to these two US specifications do not contain any side chains with nitrogen atoms.
WO 01/41720, WO 01/41721, EP-A 17121 and EP-A 282 720 describe polysiloxanes for cosmetic purposes. The polysiloxanes contain quaternary nitrogen atoms, but no side chains which contain nitrogen atoms bonded to silicon atoms. EP-A 294 642 likewise describes polysiloxanes with quaternary nitrogen atoms at the ends of the polysiloxane chain for cosmetic purposes. The polysiloxanes specified therein do not contain any side chains with nitrogen atoms.

It has been found that the products described in said specifications also have disadvantages as well as advantages when used for the treatment of textiles, e.g. with regard to nonoptimally soft properties of textiles finished therewith. In addition, the permanence of the effects on the finished textiles often leaves something to be desired. Particularly in the case of the treatment of the finished textiles with aqueous systems which comprise surface-active products, there is often the disadvantage that parts of the finishing are washed out. The result is an impairment in the effect level of the finishing and/or in the quality of the textile.

The object of the present invention was to provide compositions comprising polyorganosiloxanes which do not have the abovementioned disadvantages, which are highly suitable, in the form of aqueous dispersions, for the treatment of fiber materials, in particular fabrics, and in so doing give the finished textiles excellent softness with high permanence of the finishing effects, in particular with regard to the hydrophilic/hydrophobic properties and the softness of the finished textiles.

The object was achieved by a composition preparable by reacting a silane of the formula (I)

$$(R^1O)_3Si\text{-}Z \qquad (I)$$

or a mixture of such silanes
with an open-chain siloxane of the formula (IIa)

$$Y_3Si\text{-}O\text{-}[Si(R)(X)\text{-}O]_a\text{-}[Si(R)_2\text{-}O]_b\text{-}[Si(R)(D)\text{-}O]_l\text{-}SiY_3 \qquad (IIa)$$

where a cyclic siloxane of the formula (IIb) is optionally additionally used in the reaction

$$[Si(R)_2\text{-}O]_z \qquad (IIb)$$

where z is a number from 3 to 8, preferably 3 or 4,
or a mixture of such siloxanes of the formula (IIa) and optionally of the formula (IIb) where the individual units -Si(R)(X)-O- and -Si(R)(D)-O- and -$Si(R)_2$-O- may be distributed arbitrarily over the siloxane chain of the siloxane of the formula (IIa),
where a is a number from 0 to 500,
where b is a number from 0 to 2000,
where the sum a + b is a number from 1 to 2000,
where l is a number from 0 to 0.1·b,
where the total number of the units -Si(R)(X)-O- and -$Si(R)_2$-O- present in the siloxanes of the formula (IIa) and of the formula (IIb) used is 10 times to 1000 times the total number of units $Y_3$Si-O- present in the siloxanes of the formula (IIa) used,
where D is a radical of the formula

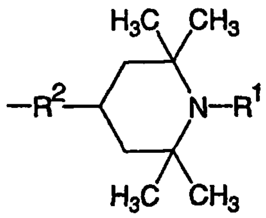

in which all of the radicals $R^1$ present are, independently of one another, hydrogen or an alkyl radical having 1 to 8 carbon atoms, preferably $-CH_3$ or $-CH_2-CH_3$,
where all of the radicals Z present are, independently of one another, a radical of the formula (III) or of the formula (IV)

$$-R^2-[L-(CH_2)_c]_d-NR^4_2 \qquad \text{(III)}$$

$$-R^2-[L-(CH_2)_c]_d-\overset{\oplus}{N}(R^5)_3 \qquad \text{(IV)}$$

in which all of the radicals $R^4$ are, independently of one another, hydrogen or a linear or branched alkyl radical having 1 to 18 carbon atoms,
all of the radicals $R^5$ are, independently of one another, a linear or branched alkyl radical having 1 to 18 carbon atoms,
c is a number from 2 to 6,
d is 0, 1 or 2,
where all of the divalent radicals L present are, independently of one another, $-NR^4-$ or

$$-\overset{\oplus}{N}(R^5)_2-$$

in which all of the radicals $R^2$ are, independently of one another, a linear or branched alkylene radical having 2 to 6 carbon atoms,
in which all of the radicals R present are, independently of one another, an alkyl radical having 1 to 4 carbon atoms, preferably $-CH_3$,
in which all of the radicals X present are a radical of the formula (V),

$$-R^2-(OCHR^6-CHR^7)_e-OR^4 \qquad \text{(V)}$$

in which $R^2$ and $R^4$ have the meanings given above,
e is a number from 2 to 25,
where in each unit $-OCHR^6-CHR^7-$ one of the radicals $R^6$ and $R^7$ is hydrogen and the other is hydrogen or a methyl group,
in which all of the radicals Y are, independently of one another, R, Z or a radical of the formula (VI), of the formula (VII), of the formula (VIII) or of the formula (IX)

$-R^2-CH(OR^1)-R$ (VI)

$-R^2-COOH$ (VII)

$-R^2-O-CH_2-B$ (VIII)

$$-R^2-O-CH_2-CH(OH)[CH_2-\overset{\oplus}{N}(R^5)_2]_t(CH_2)_k-\overset{\oplus}{N}(R^5)_3 \qquad (IX)$$

in which B is the monovalent cyclic radical derived from ethylene oxide or is a radical of the formula $-CH_2-CH_2-OH$ or of the formula $-CH(OH)-CH_3$,
where t is 0 or 1 and k has the value 1 if t = 0, and k is a number from 2 to 6 if t = 1,
where in the event that a quaternary nitrogen atom is present neither in the silane of the formula (I) nor in the siloxane of the formula (II), when the reaction is complete a quaternization reaction is carried out in which at least one of the nitrogen atoms present is quatemized,
where the counterions to the positively charged nitrogen atoms are chosen from chloride anions, alkylsulfate anions, alkylsulfonate anions, carboxylate anions, benzenesulfonate anions and toluenesulfonate anions,
where, after the reaction is complete, the resulting product mixture is optionally adjusted to a pH of less than 7 by adding an acid.

It has surprisingly been found that these compositions can overcome or at least diminish the disadvantages listed above known from the prior art. If fiber materials, in particular fabrics in the form of wovens or knits, are treated with compositions according to the invention, excellent effects with regard to a pleasantly soft hand and inert softness of the textiles can be achieved. The permanence of these effects and the permanence of the hydrophilic/hydrophobic properties of the textiles achieved through the treatment is high, i.e. the effect level does not deteriorate to an undesired degree after washing operations. For this treatment of textiles, compositions according to the invention are preferably used in the form of aqueous dispersions.

It is assumed that compositions according to the invention comprise polyorganosiloxanes in which, within the polymer chain, one or more silicon atoms are present, to which both a radical Z and also a radical $OR^1$ is bonded, i.e. that within the polymer chain one or more units of the formula

$$-Si(OR^1)(Z)-O-$$

are present.

Due to the presence of one or more groups of the formula $OR^1$, these polysiloxanes are accessible to a crosslinking reaction, optionally in the presence of water, in order to hydrolyze $OR^1$ groups if $R^1$ in these groups is not hydrogen. The crosslinking can be carried out via a reaction with polysiloxanes ("H-siloxanes") which contain Si-H bonds. It may in some cases be advantageous to carry out this reaction not with the compositions according to the invention as such or with their aqueous dispersions, but only after they have been applied to fabrics, such as, for example, wovens. For this purpose, a woven can thus be finished with an aqueous dispersion of compositions according to the invention by customary methods, e.g. by means of padding, and then be treated with an H-siloxane.
The crosslinking reaction described often allows the permanence of the finishing effects to be increased further.

Preferably, compositions according to the invention are used in the form of aqueous dispersions for the treatment of the fiber materials. Their application to textiles can take place by generally known methods for textile finishing prior to manufacture, e.g. by means of a padding process under known conditions regarding liquor concentration and drying time and drying temperature. Optionally this can be followed by a further temperature treatment (condensation) at elevated temperature of the dried textiles, primarily when the textiles are cotton articles and when the aqueous dispersions also comprise cellulose crosslinkers as well as compositions according to the invention. This condensation can be carried out by known methods. The fiber materials are preferably textile wovens or knits. They can, for example, consist of cellulose fibers, such as cotton, or of mixtures of cellulose and polyester fibers or of polyamide fibers and be used for the manufacture of articles of clothing. The aqueous dispersions which are used for the treatment of the fiber materials can, as well as comprising compositions according to the invention, also comprise further products as are known for textile finishing. Suitable products for this purpose may be waxes in dispersed form, fluorine-containing polymers, cellulose crosslinkers and flame retardants. In addition, further polyorganosiloxanes can also be added to the aqueous dispersions of compositions according to the invention, e.g. $\alpha,\omega$-dihydroxypolydimethylsiloxanes, polydimethylsiloxanes or aminofunctional polyorganosiloxanes. Representatives of said polysiloxanes are known from the prior art. If further polysiloxanes are also used as well as compositions according to the invention, then the polysiloxanes originating from compositions according to the invention should predominate, i.e. constitute more than 50% by weight of all of the polysiloxanes in the dispersion, i.e. about 51 to 95% by weight, based on all of the polyorganosiloxanes present.
The aqueous dispersions of polyorganosiloxanes according to the invention comprise a dispersant or a mixture of dispersants. These can be chosen from known standard commercial products which are used in accordance with prior art in silicone emulsions. Highly suitable dispersants are nonionogenic products, such as ethoxylated alcohols, ethoxylated fatty amines and ethoxylated fatty acids, or cation-active products, such as quaternary ammonium salts. The

concentration of compositions according to the invention and of dispersants in the aqueous dispersions can be in the range known from the prior art, e.g. the concentration of the polysiloxane mixture present in compositions according to the invention can be in the range from 5 to 40% by weight, based on the total dispersion.

The aqueous dispersions can be obtained by customary methods for the preparation of silicone emulsions by dispersing compositions according to the invention in water.

In the polyorganosiloxanes which are present in compositions according to the invention there must be at least one quaternary nitrogen atom on average per molecule. This is understood as meaning a nitrogen atom which carries a positive charge and to which 4 carbon atoms are bonded. Two or more quaternary nitrogen atoms per molecule may of course also be present. The above statement "on average per molecule" means that due to the conditions during polymer syntheses there may be individual molecules which contain no quaternary nitrogen atoms. However, the number of these is low relative to the total number of polysiloxane molecules, i.e. is less than 10% of the total number. 90 to 100% of all polysiloxane molecules comprise one or more quaternary nitrogen atoms, on average each polysiloxane molecule contains at least one quaternary nitrogen atom. This can be achieved through the use of corresponding amounts of starting compounds in the preparation of compositions according to the invention or of products which are used for the subsequent quaternization.

The presence of quaternary nitrogen atoms in the polyorganosiloxanes which are present in compositions according to the invention can be achieved in two different ways. Either those products of the formula (I) and/or of the formula (IIa) which contain one or more quaternary nitrogen atoms are used in the preparation of the compositions, or a quaternization reaction is carried out following the reaction of the silane of the formula (I) with the siloxane of the formula (IIa). Starting materials with at least one quaternary nitrogen atom are, for example, those in which the radical Z in formula (I) contains one or more quaternary nitrogen atoms, thus is a radical of the formula (IV) or is a radical of the formula (III) in which at least one radical L is a unit

$$\overset{\oplus}{-N}(R^5)_2-.$$

Starting materials of the formula (IIa) with at least one quaternary nitrogen atom are, for example, compounds of the formula (IIa) in which at least one of the radicals Y is a radical Z which contains at least one quaternary nitrogen atom, or in which at least one of the radicals Y is a radical of the formula (IX).

If neither the starting compound of the formula (I) nor that of the formula (IIa) contains a quaternary nitrogen atom, then a quaternization reaction must be carried out after reacting the compound of the formula (I) with the compound of the formula (IIa). This can take place by generally known processes for the preparation of quaternary ammonium compounds by reacting the corresponding amino group with an alkylating agent.

Compositions according to the invention comprise polysiloxanes with one or more quaternized nitrogen atoms, namely positively charged nitrogen atoms to each of which 4 carbon atoms are bonded. The counterions, i.e. the anions required to balance the charge, are, for all quaternary nitrogen atoms present, chosen from chloride anions, alkylsulfate anions, alkylsulfonate anions, carboxylate anions, benzenesulfonate anions and toluenesulfonate anions. These anions can be introduced by, in the preparation of the compositions according to the invention, carrying out the quaternization of the nitrogen atoms using alkyl chlorides, dialkyl sulfates, carboxylic alkyl esters, alkylsulfonic alkyl esters, benzenesulfonic alkyl esters or toluenesulfonic alkyl esters. Suitable alkylsulfate anions are in particular those whose alkyl group contains 1 to 4 carbon atoms. Suitable carboxylate anions are, for example, those of the formula $R^8$-$COO^{\ominus}$, in which $R^8$ is an alkyl radical having 1 to 8 carbon atoms.

Particularly highly suitable and therefore preferred anions are benzenesulfonate and toluenesulfonate anions. The toluenesulfonate here may be the o-, m- or p-isomer or a mixture of these isomers.

Instead of a single type of anion, compositions according to the invention can also comprise mixtures of anions of said type. If, for the preparation of compositions according to the invention, the starting materials used are those compounds of the formula (I) and (IIa) which already contain one or more quaternary nitrogen atoms, then either compounds which already contain anions from the abovementioned groups must be chosen, or the anions of another type present must be replaced by anions of said groups.

To prepare compositions according to the invention, a silane of the formula (I) or a mixture of such silanes

$$(R^1O)_3Si\text{-}Z \qquad (I)$$

is reacted with an open-chain siloxane of the formula (IIa)

$$Y_3Si\text{-}O\text{-}[Si(R)(X)\text{-}O]_a\text{-}[Si(R)_2\text{-}O]_b\text{-}[Si(R)(D)\text{-}O]_l\text{-}SiY_3 \qquad \text{(IIa)}$$

or a mixture of such siloxanes.

In the reaction of the silanes of the formula (I) with siloxanes of the formula (IIa), a cyclic siloxane of the formula (IIb)

$$\text{-}[Si(R)_2\text{-}O]_z\text{-} \qquad \text{(IIb)}$$

can optionally also additionally be involved in the reaction. Here, z is a number from 3 to 8. Preferably, z has the value 3 or 4. Such cyclic siloxanes are standard commercial products. Particularly highly suitable siloxanes of the formula (IIb) are cyclic dimethylsiloxanes in which R is $CH_3$ and z has the value 3 or 4, i.e. hexamethylcyclotrisiloxane or octamethylcyclotetrasiloxane. The radicals R in formula (IIb) have the same meaning as in formula (IIa).

In some cases, a cyclic siloxane of the formula (IIb) must additionally be co-used even during the reaction of the silane of the formula (I) with siloxane of the formula (IIa) in order to achieve the required chain length during the reaction. Whether the additional use of the siloxane of the formula (IIb) is optional or obligatory depends on the values of a and b in the siloxanes of the formula (IIa). This is explained in more detail below.

For the reaction of the silanes of the formula (I) with siloxanes of the formula (IIa) and optionally additionally siloxanes of the formula (IIb) it is possible to use mixtures of two or more silanes of the formula (I). The siloxanes used may be mixtures of one or more siloxanes of the formula (IIa) and optionally additionally one or more siloxanes of the formula (IIb).

In formula (I), all of the radicals $R^1$ are, independently of one another, hydrogen or an alkyl radical having 1 to 8 carbon atoms, preferably a methyl or an ethyl group.

In the compounds of the formula (I), all of the radicals Z are, independently of one another, a radical of the formula (III) or of the formula (IV),

$$\text{-}R^2\text{-}[L\text{-}(CH_2)_c]_d\text{-}NR^4{}_2 \qquad \text{(III)}$$

$$\text{-}R^2\text{-}[L\text{-}(CH_2)_c]_d\text{-}\overset{\oplus}{N}(R^5)_3 \qquad \text{(IV)}$$

in which all of the radicals $R^4$ are, independently of one another, hydrogen or a linear or branched alkyl radical having 1 to 18 carbon atoms,

all of the radicals $R^5$ are, independently of one another, a linear or branched alkyl radical having 1 to 18 carbon atoms,

all of the radicals $R^2$ are, independently of one another, a linear or branched alkylene radical having 2 to 6 carbon atoms,

c is a number from 2 to 6,

d is 0, 1 or 2,

where all of the divalent radicals L present are, independently of one another, $\text{-}NR^4\text{-}$ or

$$\text{-}\overset{\oplus}{N}(R^5)_2\text{-}.$$

Preferably, 50 to 100% of all of the radicals Z present in the silanes of the formu!a (I) are a particular radical of the formula (III) or of the formula (IV), namely are a radical of the formula (III) or of the formula (IV) in which at least one quaternized, positively charged nitrogen atom is present. This is understood as meaning a positively charged nitrogen atom to which 4 carbon atoms are bonded. Radicals of the formula (III) or of the formula (IV) in which one or more quaternized nitrogen atoms are present contain one or more divalent units

$$\overset{\oplus}{-N(R^5)_2-}$$

or monovalent units $\overset{\oplus}{-N(R^5)_3}$.

$$\overset{\oplus}{-N(R^5)_3}.$$

It is preferred if all of the radicals $R^2$ present in the radicals Z are $-(CH_2)_2-$, $-CH_2-CH(CH_3)-CH_2-$or $-(CH_2)_3-$. It is also preferred if all of the radicals $R^5$ present in the radicals Z are, independently of one another, a linear alkyl radical having 1 to 6 carbon atoms.

Suitable silanes of the formula (I) can be prepared by generally known processes. A number of suitable silanes is obtainable commercially. Examples are the products in DYNASYLAN® AMMO (= 3-aminopropyltrimethoxysilane), DYNASYLAN® 1110 (= N-methyl-3-aminopropyltrimethoxysilane), DYNASYLAN® AMEO (= 3-aminopropyltriethoxysilane), DYNASYLAN® DAMO (= N-aminoethyl-3-aminopropyltrimethoxysilane) from Hüls, Germany. Where appropriate, before these products are used for the preparation of compositions according to the invention, they can be subjected to a quaternization reaction in order to produce quaternary nitrogen atoms.

The compounds of the formula (IIa) which are likewise used as starting materials for the preparation of compositions according to the invention are siloxanes. In these siloxanes of the formula (IIa), all of the radicals R present are, independently of one another, an alkyl radical having 1 to 4 carbon atoms, preferably a methyl radical. It is particularly preferred if 70 to 100% of all of the radicals R present are $CH_3$ and the remaining 0 - 30% are $-CH_2-CH_3$.

In the siloxanes of the formula (IIa), the individual units -Si(R)(X)-O- and $-Si(R)_2-O-$ and -Si(R)(D)-O- may be distributed arbitrarily over the siloxane chain.

In formula (IIa), all of the radicals X present are a radical of the formula (V)

$$-R^2-(OCHR^6-CHR^7)_e-OR^4 \qquad (V)$$

$R^2$ here is a linear or branched alkylene radical having 2 to 6 carbon atoms. All of the units $OCHR^6-CHR^7$ are polyoxyethylene or polyoxypropylene units. This means in each of these individual units, one of the radicals $R^6$ and $R^7$ is hydrogen and the other is hydrogen or a methyl radical.

e has a value in the range from 2 to 25.

All of the radicals $R^4$ present in units of the formula (V) are, independently of one another, hydrogen or a linear or branched alkyl radical having 1 to 18 carbon atoms. Preferably, all of the radicals $R^4$ which are present in units X of the formula (V) are hydrogen.

All of the radicals Y present in siloxanes of the formula (IIa) are, independently of one another, a radical R as defined above, a radical Z as defined above, or a radical of the formula (VI), of the formula (VII), of the formula (VIII) or of the formula (IX)

$$-R^2-CH(OR^1)-R \qquad (VI)$$

$$-R^2-COOH \qquad (VII)$$

$$-R^2-O-CH_2-B \qquad (VIII)$$

$$-R^2-O-CH_2-CH(OH)[CH_2-\overset{\oplus}{N}(R^5)_2]_t(CH_2)_k-\overset{\oplus}{N}(R^5)_3 \qquad (IX)$$

In these formulae, $R^1$ and $R^2$ are as defined above. The radical B is a monovalent cyclic radical which is derived from ethylene oxide by removing a hydrogen atom, or is $-CH_2-CH_2OH$ or $-CH(OH)-CH_3$.
In formula (IIa), a is a number from 0 to 500.
In formula (IIa), b is a number from 0 to 2000.
In formula (IIa), l is a number from 0 to 0.1·b.
The sum a + b must have a value from 1 to 2000.
In addition, the total number of units -Si(R)(X)-O- and $Si(R)_2$-O- present in the siloxanes of the formula (IIa) and of the formula (IIb) used must be 10 times to 1000 times the total number of units $Y_3$Si-O- present in the siloxanes of the formula (IIa) used. This is necessary so that the polysiloxanes present in compositions according to the invention have a minimum value for the chain length or for the number of Si atoms. From the last-mentioned requirement it follows that a siloxane of the formula (IIb) must be additionally co-used in the reaction if the sum a + b in the siloxanes of the formula (IIa) used is less than 20. Without the co-use of a siloxane of the formula (IIb) the sum of the units -Si(R)(X)-O- and Si $(R)_2$-O- present would in this case be less than 10 times the number of the units $Y_3$Si-O- (since in the siloxanes of the formula (IIa), 2 units of $Y_3$Si-O- are present).
However, also in the case where a + b has a value of 20 or more, a siloxane of the formula (IIb) can additionally be co-used in order to increase the chain length of the polysiloxanes formed, if desired. Only if a + b = 2000 must no siloxane of the formula (IIb) additionally be used since otherwise the total number of units Si(R)(X)-O- and $Si(R)_2$-O- would be more than 1000 times the number of the units $Y_3$Si-O-.
The siloxanes of the formula (IIa) can optionally additionally contain units of the formula -Si(R)(D)-O-. The total number l of these radicals in a siloxane of the formula (IIa) has a value from 0 to at most 10% of the number of units $-Si-(R)_2$-O- present, i.e. a value from 0 to 0.1·b.
The radical D is a radical of the formula

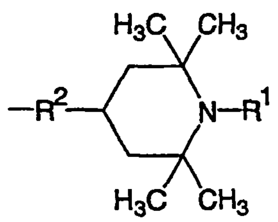

Here, $R^1$ and $R^2$ are as defined above. Preferably, all of the radicals $R^2$ present are radicals of the formulae

$$-(CH_2)_2- \quad -(CH_2)_3- \text{ or } -CH_2-CH(CH_3)-CH_2-.$$

Siloxanes which contain units of the formula -Si(R)(D)-O- are known from EP-A 659 930.
A preferred embodiment of compositions according to the invention is characterized in that the sum of the number of units $-Si(R)_2$-O- present in the siloxanes of the formula (IIa) and of the formula (IIb) used is 3 times to 50 times the number of units -Si(R)(X)-O- which are present in the siloxanes of the formula (IIa).
Preferably, in formula (IIa), all of the radicals Y present which are not a radical of the formula (IX) are Z or are $-CH_3$.
Preferred end groups $(Y)_3$Si-O- in formula (IIa) have one of the following structures:

$(R)_2$Si(Y)-O-,

in particular

$(CH_3)_2$Si(Y)-O-.

It is particularly favorable if end groups of the formula

$(CH_3)_2$Si(Y)-O-

are present on both chain ends of the siloxanes of the formula (IIa), where the radicals Y on both chain ends are, independently of one another, $CH_3$, Z or a radical of the formula (IX).
The polyorganosiloxanes present in compositions according to the invention following the described reaction

are either present as they are or in the form of reaction products with acids. The latter may be the case when the polysiloxanes, prior to a reaction with acid, contain uncharged nitrogen atoms which are protonated in the reaction with acid, thereby giving a positive charge. The addition of acid can be desired after the reaction of the silane of the formula (I) with siloxane of the formula (IIa) in order to set a pH of less than 7. Reaction products of the polysiloxanes with acids are salts. These can, for example, be present in aqueous dispersions of compositions according to the invention if a pH in the acidic range is desired for the application of the dispersions for textile finishing and is established by means of adding acid.
Acids suitable for this purpose are those which arise from the above-mentioned anions by adding a hydrogen ion, in particular hydrochloric acid, sulfuric monomethyl ester, alkylsulfonic acid, carboxylic acids, benzenesulfonic acid and toluenesulfonic acid. The acid can be added before or after dispersing compositions according to the invention in water.

Siloxanes of the formula (IIa) can contain one or more radicals Y which have the formula (IX). In these radicals, $R^2$ and $R^5$ are as defined above, t is the number 0 or 1. k has the value 1 if t = 0, and k is a number from 2 to 6 when t = 1.

Siloxanes of the formula (IIa) can be prepared by known methods. A number of such siloxanes is available on the market. Examples of commercial products are

- polydimethylsiloxane
- TEGOPREN® 5878 (Goldschmidt, Germany) = $(CH_3)_3Si\text{-}O\text{-}Si(CH_3)(X)\text{-}O\text{-}Si(CH_3)_3$
  where X is

$$-(CH_2)_3-(OCH_2CH_2)_h-OH$$

  and h has a value of about 12.
- X-22-160 AS (Shin-Etsu)
  = polysiloxane which contains $(CH_3)_2Si(Y)\text{-}O\text{-}$ groups, in which Y is $R\text{-}CH(OR^1)\text{-}R^2\text{-}$ on each of the two chain ends
- KF 105 (Shin-Etsu)
  = polysiloxane with $(CH_3)_2Si(Y)\text{-}O\text{-}$ end groups, in which Y is $B\text{-}CH_2O\text{-}R^2\text{-}$ and B is the monovalent radical derived from ethylene oxide.
- TEGOPREN® 6924 (Goldschmidt, Germany)
  = polysiloxane which has groups of the formula $(CH_3)_2Si(Y)\text{-}O\text{-}$, where Y in both cases is a radical of the above-mentioned formula (IX) on both chain ends.
- X-22-161 AS
- KF-393
- KF-859

These 3 latter products are obtainable from Shin-Etsu. They represent polydimethylsiloxanes in which both end groups have the structure

$$(CH_3)_2Si(Z)\text{-}O\text{-}$$

where Z is each a radical which has the formula (III) given above and in claim 1, in which L is $-NR^4-$ and d has the value 0 (X-22-161 AS) or the value 1 (KF-393 and KF-859).
Siloxanes of the formula (IIa) which contain both units $-Si(R)(X)\text{-}O\text{-}$ and also units $-Si(R)_2\text{-}O\text{-}$ can be prepared by reacting the abovementioned trisiloxane TEGOPREN® 5878 by means of a known equilibrium reaction with a polydimethylsiloxane in the presence of water under alkaline catalysis, e.g. KOH catalysis. Instead of the polydimethylsiloxane or in addition to it, it is also possible here to use a cyclic siloxane of the abovementioned type.
However, it is also possible for the $Si(R)_2\text{-}O\text{-}$ units to be inserted only in the course of the preparation of the compositions according to the invention. One possibility here involves starting from TEGOPREN® 5878 and reacting this product simultaneously with a silane of the formula (I) and a cyclic dimethylsiloxane $[Si(CH_3)_2\text{-}O]_z$, where z is preferably 3 or 4. Here, an open-chain polydimethylsiloxane can additionally be co-used. The conditions for this reaction are described below.

The conditions for the reaction of the silanes of the formula (I) with siloxanes of the formula (IIa) and optionally of the formula (IIb) are known to the person skilled in the art. This reaction consists in an equilibrium reaction described in the silicone literature. The equilibrium leads to the insertion of units $-Si(OR^1)(Z)$ which originate from silanes of the formula (I), and optionally of units of the formula $Si(R)_2$-O- which originate from siloxanes of the formula (IIb) into the chain of the siloxanes of the formula (IIa).
The reaction (equilibrium) is normally carried out in the presence of a catalyst. For this purpose, it is possible to use alkaline or acidic catalysts, as are known from the silicone literature, e.g. sulfuric acid, phosphoric acid, potassium hydroxide or sodium hydroxide, but also salts of transition metals, such as $SnCl_4$.
Said reaction must be carried out in the presence of water if at least 2 of the radicals $OR^1$ in the silane of the formula (I) used are not a hydroxyl group. The presence of water is in this case necessary in order that 2 of the radicals $OR^1$ can be cleaved off from formula (I) in the form of the corresponding alcohol $R^1OH$.
The reaction of the silanes of the formula (I) with the siloxanes of the formula (IIa) and optionally (IIb) can be carried out under known conditions. Normally, it is carried out at a temperature in the range from 110 to 130°C.
If, as described above, the presence of water is not necessary, said reaction can be carried out in an inert organic solvent. It can in this case, however, also take place without solvents.
In a number of cases it is advantageous if, as well as silanes of the formula (I), also silanes of the formula (X)

$$(R^1O)_2\,Si(R)Z \qquad (X)$$

are additionally co-used. Here, R, $R^1$ and Z are as defined above. The co-use of such trifunctional silanes is suitable in particular when crosslinking reactions are to be largely or completely suppressed. It is also possible to use a molar excess of silanes of the formula (X) compared with silanes of the formula (I).
Silanes of the formula (X) are available on the market. Examples are the products DYNASYLAN® 1411 and DYNASYLAN® 1505 from Hüls, Germany.
Preferably, the reaction of the silanes of the formula (I) with the siloxanes of the formula (IIa) and optionally additionally siloxanes of the formula (IIb) is carried out with amounts of starting materials such that the molar ratio of silane of the formula (I) to units of the formula $-Si(R)_2$-O- is in the range from 1 : 3 to 1 : 400. If, additionally to siloxanes of the formula (IIa), further starting materials are used which contain units of the formula $-Si(R)_2$-O-, e.g. cyclic dimethylsiloxanes of the formula (IIb), then when calculating the abovementioned ratio the molar amounts of $-Si(R)_2$-O- present therein are added to the amounts of the $-Si(R)_2$-O- units which are present in the compounds of the formula (IIa).
Following the reaction of the silanes of the formula (I) with siloxanes of the formula (IIa) and optionally additionally of the formula (IIb), the polysiloxanes formed do not have to be separated off and purified. Instead, the compositions according to the invention obtained can be used for the textile finishing without further work-up, preferably after they have been converted into aqueous dispersions. It should, however, be ensured that the reaction is carried out until the compositions according to the invention formed comprise no or only insignificant residual amounts of unreacted silanes of the formula (I) and of the formula (X).
The invention is illustrated below by working examples.

<u>Example 1 (according to the invention)</u>

| | |
|---|---|
| 93 g of a polydimethylsiloxane | ("silicone oil AK 500", Wacker, Germany) (= siloxane of the formula (IIa)) |
| 4.4 g of | $Si(CH_3)(OCH_3)_2(-CH_2CH_2CH_2NHCH_2CH_2NH_2)$ (= silane of the formula (X)) |
| 0.84 g of | $Si(OCH_3)_3(-CH_2CH_2CH_2NHCH_2CH_2NH_2)$ (= silane of the formula (I)) |

were mixed together and the mixture was heated to 85°C. To the mixture were added 2.1 g of water and 0.25 g of 45% strength aqueous potassium hydroxide solution.
The mixture was then kept at 85°C for 30 minutes with stirring. The mixture is then heated to 120°C and stirred at this temperature for 3 hours. This gave a cloudy mixture with a viscosity of 400 mPa.sec at 20°C.

Example 2 (according to the invention)

Example 1 was repeated but using only 46.5 g of the polydimethylsiloxane. The other 46.5 g were replaced by 46.5 g of octamethylcyclotetrasiloxane (= siloxane of the formula (IIb)).
This gave a cloudy mixture with a viscosity of 450 mPa.sec (at 20°C).

Example 3 (according to the invention)

Example 1 was repeated but without using the polydimethylsiloxane specified therein. Instead, the starting materials were 90.6 g of octamethylcyclotetrasiloxane (= siloxane of the formula (IIb)) and additionally 2.1 g of a trisiloxane (= siloxane of the formula (IIa)). The trisiloxane used (TEGOPREN® 5878) had the formula

$$(CH_3)_3Si\text{-}O\text{-}Si(CH_3)(X)\text{-}O\ Si(CH_3)_3$$

where X is a radical which contains polyoxyethylene groups and falls under the definition of claim 1.
This gave a cloudy mixture with a viscosity of 1000 mPa.sec (at 20°C).

Example 4 (noninventive comparative example)

The procedure was as in example 1, using 93.1 g of silicone oil AK 500 (= siloxane of the formula (IIa)) and 5.25 g of the silane of the formula (X) given in example 1. No silane of the formula (I) specified in claim 1 was used. In place of 2.1 g of water, only 1.55 g were used. This gave a cloudy mixture with a viscosity of 300 mPa.sec (at 20°C).

Example 5 (noninventive comparative example)

The procedure was as in example 4 except that no silicone oil AK 500 was used, but 90.6 g of octamethylcyclotetrasiloxane and 2.1 g of the trisiloxane given in example 3. No silane of the formula (I) was used.
This gave a cloudy mixture with a viscosity of 800 mPa.sec (at 20°C).

Examples 1 a and 3a to 5a

Examples 1 a and 3a are examples according to the invention, examples 4a and 5a are noninventive comparative examples.
Each of the mixtures obtained in examples 1 and 3 to 5 was converted to an aqueous dispersion, during which a quaternization of nitrogen atoms by means of p-toluenesulfonic methyl ester was carried out simultaneously. The aqueous dispersion obtained according to example 1 a comprised the mixture of example 1 etc.
To prepare the aqueous dispersions the following procedure was used:

A mixture was prepared which comprised the following components:

- 20 g of a mixture of three different ethoxylated alcohols (dispersant mixture)
- 2.15 g of $NaHCO_3$
- 7.9 g of a mixture of propylene glycol and a phosphoric triester
- 132 g of Permutit water

At room temperature, 29.8 g of each of the products obtained according to example 1 and 3 to 5 were added to 5 samples of this mixture. The resulting mixtures were stirred at room temperature and, with stirring,
7.25 g of p-toluenesulfonic methyl ester
were added. The mixture was then heated to 60°C and stirred at this temperature for 4 hours.
1 g of sodium formate was then added.
All 4 cases gave stable, transparent, homogeneous dispersions.

Examples 1b and 3b to 5b and 1c and 3c to 5c

Aqueous liquors 1b, 3b to 5b and 1c, 3c to 5c were prepared. The liquors 1b, 3b to 5b each comprised 30 g/l of one of the dispersions 1a, 3a to 5a, the remainder of each liquor consisted of water. The dispersions 1c, 3c to 5c each comprised 30 g/l of one of the dispersions 1a, 3a to 5a, additionally 5 g/l of an aqueous dispersion which comprised 50% by weight of a hydrogen methyl polysiloxane ("H-siloxane"), i.e. a siloxane in which Si-H bonds are present. In

addition, the liquors 1 c and 3c to 5c also comprised 3 g of a 50% strength aqueous solution of $MgCl_2 \times 6 H_2O$ and 3 ml/l of 60% strength aqueous acetic acid solution. The remainder of liquors 1 c and 3c to 5c consisted of water.

Liquors 1 b, 3b to 5b and 1 c, 3c to 5c were used to finish 100% cotton fabric.

Finishing conditions:

- Application by means of padding
- Liquor pick-up (= weight increase of the fabric after padding and squeezing, based on nonfinished fabric) each about 100%
- Drying: 10 minutes at 110°C

For the fabrics finished with liquors 1 c and 3c to 5c, a curing at 150°C was then carried out for a further 5 minutes.

On some of the fabric samples obtained in this way, the hand was assessed manually and the hydrophilic/hydrophobic properties were determined by means of a "drop test". In this test, a drop of water is placed onto the fabric sample and the time (penetration time) in which the drop has completely penetrated into the fabric is determined in seconds. Thus, in the table below, a higher numerical value for the hydrophobicity indicates a higher Hydrophobicity. On some of the fabrics finished with said liquors, the hand was assessed and hydrophilic/hydrophobic properties were determined after the fabric samples had been subjected to washing operations. The washes were carried out in a domestic washing machine using a standard commercial surfactant-containing washing solution. In each case, one fabric sample was washed once for 1 hour at 40°C, in each case another sample was washed 5 × 1 hour at 40°C. From the comparison of the properties of the unwashed fabric samples with those of the fabrics washed once or washed five times it is possible to obtain statements regarding the permanence of these properties toward washing operations.

Table 1 shows the results obtained with the liquors 1b and 3b to 5b, and table 2 shows the results obtained with the liquors 1 c and 3c to 5c.

Table 1

| | Hand | | Hydrophobicity (Penetration time in sec) | |
|---|---|---|---|---|
| | unwashed | washed once | unwashed | washed 5 times |
| Liquor 1 b Cotton fabric | | somewhat harder than unwashed | 38 | 49 |
| Liquor 3b Cotton fabric | | harder than unwashed | 44 | 54 |
| Liquor 4b Cotton fabric | | significantly harder than unwashed | 6 | 0-1 |
| Liquor 5b Cotton fabric | | extremely hard, much harder than unwashed | 13 | 0-1 |

Table 2

| | Hand | | Hydrophobicity (Penetration time in sec) | | |
|---|---|---|---|---|---|
| | unwashed | washed once | unwashed | washed once | washed 5 times |
| Liquor 1 c Cotton fabric | very soft | soft | > 120 | > 120 | 57 |
| Liquor 3c Cotton fabric | soft | very soft | > 120 | > 120 | 55 |
| Liquor 4c Cotton fabric | somewhat hard | hard | 45 | 9 | 2 |
| Liquor 5c Cotton fabric | soft | hard | 110 | 32 | 2 |

It is useful to compare the results obtained with the liquors 1 b and 1 c with those which have been obtained with the liquors 4b and 4c since in all of these cases the polysiloxane contains no polyoxyalkylene groups. On the other hand, the results obtained with the liquors 3b and 3c should be compared with those which have been obtained with the

liquors 5b and 5c (polysiloxanes with polyoxyalkylene groups).

Tables 1 and 2 show that the percentage change in the numerical value for the hydrophobicity after washing operations in the case of the examples (liquors) 1 b and 1 c according to the invention is lower than in the case of the corresponding comparative examples 4b and 4c. The comparison between the examples (liquors) 3b and 3c according to the invention on the one hand and 5b and 5c on the other hand gives an analogous result. This means that a better permanence of the effects toward washing operations is obtained with the examples 1b, 1c, 3b, 3c according to the invention than with the comparative examples 4b, 4c, 5b and 5c.

The permanence of the hand properties toward washing operations is, as tables 1 and 2 show, likewise better if compositions according to the invention were used (examples 1b, 1 c, 3b, 3c) than in the case of the use of noninventive compositions (comparative examples 4b, 4c, 5b, 5c).

## Claims

**1.** A composition preparable by reacting a silane of the formula (I)

$$(R^1O)_3Si\text{-}Z \qquad (I)$$

or a mixture of such silanes
with an open-chain siloxane of the formula (IIa)

$$Y_3Si\text{-}O\text{-}[Si(R)(X)\text{-}O]_a\text{-}[Si(R)_2\text{-}O]_b\text{-}[Si(R)(D)\text{-}O]_l\text{-}SiY_3 \qquad (IIa)$$

where a cyclic siloxane of the formula (IIb) is optionally additionally used in the reaction

$$[Si(R)_2\text{-}O]_z \qquad (IIb)$$

where z is a number from 3 to 8, preferably 3 or 4,
or a mixture of such siloxanes of the formula (IIa) and optionally of the formula (IIb) where the individual units -Si (R)(X)-O- and -Si(R)(D)-O- and $-Si(R)_2-O-$ may be distributed arbitrarily over the siloxane chain of the siloxane of the formula (IIa), where a is a number from 0 to 500,
where b is a number from 0 to 2000,
where the sum a + b is a number from 1 to 2000,
where l is a number from 0 to 0.1·b,
where the total number of the units -Si(R)(X)-O- and $Si(R)_2-O-$ present in the siloxanes of the formula (IIa) and of the formula (IIb) used is 10 times to 1000 times the total number of units $Y_3Si-O-$ present in the siloxanes of the formula (IIa) used,
where D is a radical of the formula

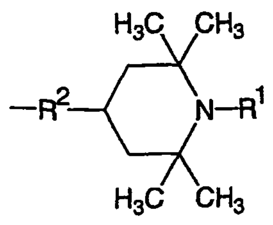

in which all of the radicals $R^1$ present are, independently of one another, hydrogen or an alkyl radical having 1 to 8 carbon atoms, preferably $-CH_3$ or $-CH_2-CH_3$,
where all of the radicals Z present are, independently of one another, a radical of the formula (III) or of the formula (IV)

$$-R^2-[L-(CH_2)_c]_d-NR^4{}_2 \qquad (III)$$

$$-R^2-[L-(CH_2)_c]_d-\overset{\oplus}{N}(R^5)_3 \qquad (IV)$$

in which all of the radicals $R^4$ are, independently of one another, hydrogen or a linear or branched alkyl radical having 1 to 18 carbon atoms,
all of the radicals $R^5$ are, independently of one another, a linear or branched alkyl radical having 1 to 18 carbon atoms,
c is a number from 2 to 6,
d is 0, 1 or 2,
where all of the divalent radicals L present are, independently of one another, $-NR^4-$ or

$$-\overset{\oplus}{N}(R^5)_2-$$

in which all of the radicals $R^2$ are, independently of one another, a linear or branched alkylene radical having 2 to 6 carbon atoms,
in which all of the radicals R present are, independently of one another, an alkyl radical having 1 to 4 carbon atoms, preferably $-CH_3$,
in which all of the radicals X present are a radical of the formula (V),

$$-R^2-(OCHR^6-CHR^7)_e-OR^4 \qquad (V)$$

in which $R^2$ and $R^4$ have the meanings given above,
e is a number from 2 to 25,
where in each unit $-OCHR^6-CHR^7-$ one of the radicals $R^6$ and $R^7$ is hydrogen and the other is hydrogen or a methyl group,
in which all of the radicals Y are, independently of one another, R, Z or a radical of the formula (VI), of the formula (VII), of the formula (VIII) or of the formula (IX)

$-R^2CH(OR^1)-R$ (VI)

$-R^2-COOH$ (VII)

$-R^2-O-CH_2-B$ (VIII)

$$-R^2-O-CH_2-CH(OH)[CH_2-\overset{\oplus}{N}(R^5)_2]_t(CH_2)_k-\overset{\oplus}{N}(R^5)_3 \qquad (IX)$$

in which B is the monovalent cyclic radical derived from ethylene oxide or is a radical of the formula $-CH_2-CH_2-OH$ or of the formula $-CH(OH)-CH_3$,
where t is 0 or 1 and k has the value 1 if t = 0, and k is a number from 2 to 6 if t = 1, where in the event that a quaternary nitrogen atom is present neither in the silane of the formula (I) nor in the siloxane of the formula (II), when the reaction is complete a quaternization reaction is carried out in which at least one of the nitrogen atoms present is quatemized,
where the counterions to the positively charged nitrogen atoms are chosen from chloride anions, alkylsulfate anions,

alkylsulfonate anions, carboxylate anions, benzenesulfonate anions and toluenesulfonate anions,
where, after the reaction is complete, the resulting product mixture is optionally adjusted to a pH of less than 7 by adding an acid.

2. The composition as claimed in claim 1, **characterized in that** the reaction is carried out with amounts of starting materials such that the molar ratio of silane of the formula (I) to units of the formula $-Si(R)_2-O-$ is in the range from 1 : 3 to 1 : 400.

3. The composition as claimed in claim 1 or 2, **characterized in that** the siloxane of the formula (IIa) used is a siloxane which has, on both chain ends, radicals of the formula

$$(CH_3)_2Si(Y)-O-$$

in which the two radicals Y are, independently of one another, $CH_3$, Z or a radical of the formula (IX).

4. The composition as claimed in one or more of claims 1 to 3, **characterized in that** 70 to 100% of all radicals R present are $CH_3$ and the remaining 0 - 30% are $-CH_2-CH_3$.

5. The composition as claimed in one or more of claims 1 to 4, **characterized in that** 50 to 100% of all of the radicals Z present contain a structural unit

$$\overset{\oplus}{-N}(R^5)_2-$$

and/or a structural unit

$$\overset{\oplus}{-N}(R^5)_3.$$

6. The composition as claimed in one or more of claims 1 to 5, **characterized in that** all of the radicals Y present which are not a radical of the formula (IX) are Z or $-CH_3$.

7. The composition as claimed in one or more of claims 1 to 6, **characterized in that** the sum of the number of the units $-Si(R)_2-O-$ present in the siloxanes of the formula (IIa) and of the formula (IIb) used is 3 times to 50 times the number of units $-Si(R)(X)-O-$which are present in the siloxanes of the formula (IIa).

8. An aqueous dispersion which comprises a composition as claimed in one or more of claims 1 to 7.

9. The use of an aqueous dispersion as claimed in claim 8 for the treatment of fiber materials.

10. The use as claimed in claim 9, **characterized in that** the fiber materials are fabrics in the form of wovens or knits.

**Patentansprüche**

1. Zusammensetzung, herstellbar durch Umsetzung eines Silans der Formel (I)

$$(R^1O)_3Si-Z \qquad (I)$$

oder eines Gemischs solcher Silane
mit einem offenkettigen Siloxan der Formel (IIa)

$$Y_3Si\text{-}O\,\{Si(R)(X)\text{-}O\}_a\{Si(R)_2\text{-}O\}_b\{Si(R)(D)\text{-}O\}_l\,Si\,Y_3 \qquad (IIa)$$

wobei gegebenenfalls bei der Umsetzung zusätzlich ein cyclisches Siloxan der Formel (IIb) verwendet wird

$$-\{Si(R)_2\text{-}O\}_z- \qquad (IIb)$$

wobei z für eine Zahl von 3 bis 8, vorzugsweise für 3 oder 4 steht,
oder einem Gemisch solcher Siloxane der Formel (IIa) und gegebenenfalls der Formel (IIb) wobei die einzelnen Einheiten -Si(R)(X)-O- und -Si(R)(D)-O- und $-Si(R)_2-O-$ beliebig über die Siloxankette des Siloxans der Formel (IIa) verteilt sein können, wobei a eine Zahl von 0 bis 500 ist,
wobei b eine Zahl von 0 bis 2000 ist,
wobei die Summe a + b eine Zahl von 1 bis 2000 ist,
wobei l eine Zahl von 0 bis 0,1·b ist,
wobei die Gesamtzahl der in den verwendeten Siloxanen der Formel (IIa) und der Formel (IIb) anwesenden Einheiten -Si(R)(X)-O- und $Si(R)_2-O-$ das 10-fache bis 1000-fache der Gesamtzahl der in den verwendeten Siloxanen der Formel (IIa) anwesenden Einheiten $Y_3$ Si-O- beträgt,
wobei D ein Rest der Formel

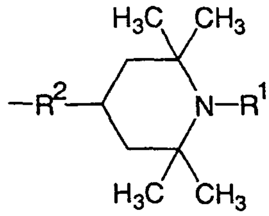

ist,
worin alle anwesenden Reste $R^1$ unabhängig voneinander für Wasserstoff oder einen Alkylrest mit 1 bis 8 Kohlenstoffatomen, vorzugsweise für $-CH_3$ oder $-CH_2-CH_3$, stehen, wobei alle anwesenden Reste Z unabhängig voneinander für einen Rest der Formel (III) oder der Formel (IV)

$$-R^2\{L(CH_2)_c\}_d NR^4_2 \qquad (III)$$

$$-R^2\{L(CH_2)_c\}_d \overset{\oplus}{N}(R^5)_3 \qquad (IV)$$

stehen,
worin alle Reste $R^4$ unabhängig voneinander für Wasserstoff oder einen linearen oder verzweigten Alkylrest mit 1 bis 18 Kohlenstoffatomen stehen,
alle Reste $R^5$ unabhängig voneinander für einen linearen oder verzweigten Alkylrest mit 1 bis 18 Kohlenstoffatomen stehen,
c für eine Zahl von 2 bis 6 steht,
d für 0, 1 oder 2 steht,
wobei alle anwesenden zweiwertigen Reste L unabhängig voneinander für $-NR^4-$ oder für

$$\overset{\oplus}{-N(R^5)_2-}$$

stehen,
worin alle Reste $R^2$ unabhängig voneinander für einen linearen oder verzweigten Alkylenrest mit 2 bis 6 Kohlenstoffatomen stehen,
worin alle anwesenden Reste R unabhängig voneinander für einen Alkylrest mit 1 bis 4 Kohlenstoffatomen, vorzugsweise für $-CH_3$ stehen,
worin alle anwesenden Reste X für einen Rest der Formel (V) stehen,

$$-R^2\!-\!(-OCHR^6-CHR^7-)_e\!-OR^4 \qquad (V)$$

worin $R^2$ und $R^4$ die oben genannten Bedeutungen besitzen,
e eine Zahl von 2 bis 25 ist,
wobei in jeder Einheit $-OCHR^6-CHR^7-$ einer der Reste $R^6$ und $R^7$ für Wasserstoff und der andere für Wasserstoff oder eine Methylgruppe steht,
worin alle Reste Y unabhängig voneinander für R, Z oder für einen Rest der Formel (VI), der Formel (VII), der Formel (VIII) oder der Formel (IX) stehen

$$-R^2-CH(OR^1)-R \qquad (VI)$$

$$-R^2-COOH \qquad (VII)$$

$$-R^2-O-CH_2-B \qquad (VIII)$$

$$-R^2-O-CH_2-CH(OH)-[-CH_2-\overset{\oplus}{N}(R^5)_2-]_t\,(CH_2)_k-\overset{\oplus}{N}(R^5)_3 \qquad (IX)$$

worin B der einwertige, von Ethylenoxid abgeleitete cyclische Rest oder ein Rest der Formel $-CH_2-CH_2-OH$ oder der Formel $-CH(OH)-CH_3$ ist,
wobei t 0 oder 1 ist und k den Wert 1 besitzt, wenn t = 0 ist, und k für eine Zahl von 2 bis 6 steht, wenn t = 1 ist,
wobei für den Fall, dass weder in dem Silan der Formel (I) noch in dem Siloxan der Formel (II) ein quaternäres Stickstoffatom anwesend ist, im Anschluß an die Umsetzung eine Quaternisierungsreaktion durchgeführt wird, bei der mindestens eines der anwesenden Stickstoffatome quaternisiert wird,
wobei die Gegenionen zu den positiv geladenen Stickstoffatomen ausgewählt sind aus Chloridanionen, Alkylsulfatanionen, Alkylsulfonatanionen, Carboxylatanionen, Benzolsulfonatanionen und Toluolsulfonatanionen,
wobei gegebenenfalls nach Beendigung der Umsetzung das erhaltene Produktgemisch durch Zugabe einer Säure auf einen pH-Wert von weniger als 7 eingestellt wird.

2. Zusammensetzung nach Anspruch 1, **dadurch gekennzeichnet, dass** die Umsetzung mit solchen Mengen an Ausgangsstoffen durchgeführt wird, dass das molare Verhältnis von Silan der Formel (I) zu Einheiten der Formel $-Si(R)_2-O-$ im Bereich von 1 : 3 bis 1 : 400 liegt.

3. Zusammensetzung nach Anspruch 1 oder 2, **dadurch gekennzeichnet, dass** als Siloxan der Formel (IIa) ein Siloxan eingesetzt wird, das an beiden Kettenenden Reste der Formel

$$(CH_3)_2Si(Y)-O-$$

aufweist, bei denen die beiden Reste Y unabhängig voneinander für $CH_3$, Z oder einen Rest der Formel (IX) stehen.

4. Zusammensetzung nach einem oder mehreren der Ansprüche 1 bis 3, **dadurch gekennzeichnet, dass** 70 bis 100 % aller anwesenden Reste R für $CH_3$ und die übrigen 0 - 30 % für $-CH_2-CH_3$ stehen.

5. Zusammensetzung nach einem oder mehreren der Ansprüche 1 bis 4, **dadurch gekennzeichnet, dass** 50 bis 100 % aller anwesenden Reste Z eine Struktureinheit

$$\overset{\oplus}{-N}(R^5)_2-$$

und/oder eine Struktureinheit

$$\overset{\oplus}{-N}(R^5)_3$$

enthalten.

6. Zusammensetzung nach einem oder mehreren der Ansprüche 1 bis 5, **dadurch gekennzeichnet, dass** alle anwesenden Reste Y, die nicht für einen Rest der Formel (IX) stehen, für Z oder für $-CH_3$ stehen.

7. Zusammensetzung nach einem oder mehreren der Ansprüche 1 bis 6, **dadurch gekennzeichnet, dass** die Summe der Anzahl der in den verwendeten Siloxanen der Formel (IIa) und der Formel (IIb) anwesenden Einheiten $Si(R)_2-O-$ das 3-fache bis 50-fache der Anzahl der Einheiten
-Si(R)(X)-O-, die in den Siloxanen der Formel (IIa) vorliegen, beträgt.

8. Wässrige Dispersion, welche eine Zusammensetzung gemäß einem oder mehreren der Ansprüche 1 bis 7 enthält.

9. Verwendung einer wässrigen Dispersion nach Anspruch 8 zur Behandlung von Fasermaterialien.

10. Verwendung nach Anspruch 9, **dadurch gekennzeichnet, dass** die Fasermaterialien textile Flächengebilde in Form von Geweben oder Maschenware sind.

**Revendications**

1. Composition apte à être préparée par réaction du silane de la formule (I) :

$$(R^1O)Si-Z \qquad (I)$$

ou d'un mélange de tels silanes
avec un siloxane à chaîne ouverte de la formule (IIa) :

$$Y_3Si-O-[Si(R)(X)-O]_a-[Si(R)_2-O]_b-[Si(R)(D)-O]_l-SiY_3 \qquad (IIa)$$

où un siloxane cyclique de la formule (IIb) est facultativement utilisé additionnellement dans la réaction :

$$-[Si(R)_2-O]_z- \qquad (IIb)$$

où z est un nombre de 3 à 8, de préférence de 3 ou 4,
ou un mélange de tels siloxanes de la formule (IIa) et facultativement de la formule (IIb)

où les unités individuelles -Si(R)(X)-O- et -Si(R)(D)-O- et $-Si(R)_2-O-$ peuvent être distribuées de façon arbitraire sur la chaîne siloxane du siloxane de la formule (IIa),
où a est un nombre de 0 à 500,
où b est un nombre de 0 à 2000,
où la somme a + b est un nombre de 1 à 2000,
où l est un nombre de 0 à 0,1·b,
où le nombre total des unités -Si(R)(X)-O- et $Si-(R)_2-O-$présentes dans les siloxanes de la formule (IIa) et de la formule (IIb) utilisés est de 10 fois à 1000 fois le nombre total d'unités $Y_3Si-O-$ présentes dans les siloxanes de la formule (IIa) utilisés,
où D est un radical de la formule :

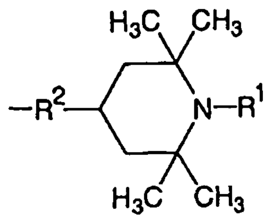

dans lequel tous les radicaux $R^1$ présents sont, indépendamment les uns des autres, hydrogène ou un radical alkyle ayant 1 à 8 atomes de carbone, de préférence $-CH_3$ ou $-CH_2-CH_3$,
où tous les radicaux Z présents sont, indépendamment les uns des autres, un radical de la formule (III) ou de la formule (IV) :

$$-R^2-[L-(CH_2)_c]_d-NR^4_2 \qquad (III)$$

$$-R^2-[L-(CH_2)_c]_d-\overset{\oplus}{N}(R^5)_3 \qquad (IV)$$

dans lesquelles tous les radicaux $R^4$ sont, indépendamment les uns des autres, hydrogène ou un radical alkyle linéaire ou ramifié ayant 1 à 18 atomes de carbone,
tous les radicaux $R^5$ sont, indépendamment les uns des autres, un radical alkyle linéaire ou ramifié ayant 1 à 18 atomes de carbone,
c est un nombre de 2 à 6,
d est 0,1 ou 2,
où tous les radicaux divalents L présents sont, indépendamment les uns des autres $-NR^4-$ ou

$$-\overset{\oplus}{N}(R^5)_2-$$

où tous les radicaux $R^2$ sont, indépendamment les uns des autres, un radical alkylène linéaire ou ramifié ayant 2 à 6 atomes de carbone,
où tous les radicaux R présents sont, indépendamment les uns des autres, un radical alkyle ayant 1 à 4 atomes de carbone, de préférence $-CH_3$,
où tous les radicaux X présents sont un radical de la formule (V),

$$-R^2-(OCHR^6-CHR^7)_e-OR^4 \qquad (V)$$

dans laquelle $R^2$ et $R^4$ ont les significations données ci-dessus,
e est un nombre de 2 à 25,
où, dans chaque unité $-OCHR^6-CHR^7$, l'un des radicaux $R^6$ et $R^7$ représente hydrogène et l'autre représente hydrogène ou un groupe méthyle,
où tous les radicaux Y sont, indépendamment les uns des autres, R, Z ou un radical de la formule (VI), de la formule (VII), de la formule (VIII) ou de la formule (IX) :

$$-R^2-CH(OR^1)-R \quad (VI)$$

$$-R^2-COOH \quad (VII)$$

$$-R^2-O-CH_2-B \quad (VIII)$$

$$-R^2-O-CH_2-CH(OH)[CH_2-\overset{\oplus}{N}(R^5)_2]_t(CH_2)_k-\overset{\oplus}{N}(R^5)_3 \quad (IX)$$

où B est le radical cyclique monovalent provenant de l'oxyde d'éthylène ou est un radical de la formule $-CH_2-CH_2-OH$ ou de la formule $-CH(OH)-CH_3$,
où t est 0 ou 1 et k a la valeur 1 si t=0, et k est un nombre de 2 à 6 si t = 1,
où, dans le cas où un atome d'azote quaternaire est présent ni dans le silane de la formule (1) ni dans le siloxane de la formule (II), lorsque la réaction est complète, une réaction de quaternisation est effectuée dans laquelle au moins de l'un des atomes d'azote présents est quaternisé, où les contre-ions des atomes d'azote chargés positivement sont choisis parmi les anions chlorure, les anions alkylsulfate, les anions alkylsulfonate, les anions carboxylate, les anions benzènesulfonate et les anions toluènesulfonate,
où, après que la réaction soit complète, le mélange de produits résultant est facultativement ajusté à un pH de moins de 7 par addition d'un acide.

2. Composition selon la revendication 1, **caractérisée par le fait que** la réaction est effectuée avec des quantités de matières de départ telles que le rapport molaire de silane de la formule (I) aux unités de la formule $-Si(R)_2-O-$ se situe dans la plage de 1:3 à 1:400.

3. Composition selon l'une des revendications 1 ou 2, **caractérisée par le fait que** le siloxane de la formule (IIa) utilisé est un siloxane qui a, sur les deux extrémités de chaîne, des radicaux de la formule :

$$(CH_3)_2Si\ (Y)\ -O-$$

dans laquelle les deux radicaux Y sont, indépendamment l'un de l'autre, $CH_3$, Z ou un radical de la formule (IX).

4. Composition selon l'une ou plusieurs des revendications 1 à 3, **caractérisée par le fait que** 70 à 100 % de tous les radicaux R présents sont $CH_3$ et les 0 - 30 % restants sont $-CH_2-CH_3$.

5. Composition selon l'une ou plusieurs des revendications 1 à 4, **caractérisée par le fait que** 50 à 100 % de tous les radicaux Z présents contiennent une unité structurale :

$$-\overset{\oplus}{N}(R^5)_2-$$

et/ou une unité structurale :

$$-\overset{\oplus}{N}(R^5)_3.$$

**6.** Composition selon l'une ou plusieurs des revendications 1 à 5, **caractérisée par le fait que** tous les radicaux Y présents qui ne sont pas un radical de la formule (IX) sont Z ou $-CH_3$.

**7.** Composition selon l'une ou plusieurs des revendications 1 à 6, **caractérisée par le fait que** la somme du nombre des unités $-Si(R)_2-O-$ présentes dans les siloxanes de la formule (IIa) et de la formule (IIb) utilisés est de 3 fois à 50 fois le nombre d'unités - Si(R)(X)-O- qui sont présentes dans les siloxanes de la formule (IIa).

**8.** Dispersion aqueuse qui comprend une composition telle que définie à l'une ou plusieurs des revendications 1 à 7.

**9.** Utilisation d'une dispersion aqueuse telle que définie à la revendication 8 pour le traitement de matières fibreuses.

**10.** Utilisation selon la revendication 9, **caractérisée par le fait que** les matières fibreuses sont des tissus sous la forme de tissés ou de tricots.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 19652524 A
- WO 9932539 A
- DE 10036533 A
- DE 10036677 A
- DE 10036678 A
- DE 10036693 A
- DE 10036694 A
- US 4833225 A
- US 4533714 A
- WO 0141720 A
- WO 0141721 A
- EP 17121 A
- EP 282720 A
- EP 294642 A
- EP 659930 A